# EUROPEAN PATENT SPECIFICATION

(11) **EP 4 184 661 B1**
(45) Date of publication and mention of the grant of the patent: **29.01.2025**
(21) Application number: 22206929.6
(22) Date of filing: 11.11.2022
(51) Int. Cl.: H01M 10/613, H01M 10/625, H01M 10/647, H01M 10/653, H01M 10/6557, H01M 10/6566, H01M 50/209, H01M 50/224, H01M 50/242, H01M 50/249, H01M 50/264, H01M 50/291, H01M 50/293

(54) **BATTERY MODULE**
BATTERIEMODUL
MODULE DE BATTERIE

(30) Priority: 17.11.2021 JP 2021187142
(43) Date of publication of application: 24.05.2023
(73) Proprietor: Prime Planet Energy & Solutions, Inc., Chuo-ku Tokyo 103-0022 (JP)
(72) Inventor: ABE, Kosyo, Tokyo, 103-0022 (JP); TAKEDA, Takahide, Tokyo, 103-0022 (JP); TSUCHIDA, Yasushi, Tokyo, 103-0022 (JP); KOIKE, Masaki, Tokyo, 103-0022 (JP); WATANABE, Koji, Tokyo, 103-0022 (JP); SUZUKI, Yuzo, Tokyo, 103-0022 (JP); OCHI, Makoto, Tokyo, 103-0022 (JP); IWASE, Kosuke, Tokyo, 103-0022 (JP); IKEDA, Yasuo, Tokyo, 103-0022 (JP); TAKENO, Mio, Tokyo, 103-0022 (JP); SAKURAMOTO, Seiichi, Tokyo, 103-0022 (JP); KOBAYASHI, Keiichiro, Tokyo, 103-0022 (JP)
(74) Representative: Kuhnen & Wacker Patent- und Rechtsanwaltsbüro PartG mbB

(56) References cited:
- EP-B1- 2 474 055
- CN-A- 113 661 599
- US-A1- 2006 214 641

## Description

This nonprovisional application is based on Japanese Patent Application No. 2021-187142 filed on November 17, 2021 with the Japan Patent Office.

### BACKGROUND OF THE INVENTION

### Field of the Invention

The present technology relates to a battery module.

### Description of the Background Art

A battery module in which a plurality of battery cells are stacked has been conventionally known. A partition wall portion (separator) for securing insulation is provided between the plurality of battery cells, and a path for cooling air is provided in the partition wall portion (Japanese Patent Laying-Open No. 2010-61982 and Japanese Patent Laying-Open No. 2004-362879).

Further, patent document EP 2 474 055 B1 discloses an electrochemical energy storage device comprising a casing, in which a plurality of flat galvanic cells are arranged. Between two adjacent flat galvanic cells is in each case, a flat heat conducting body and/or a flat elastic body arranged. Preferably, the flat galvanic cells, the flat heat conducting bodies and/or the flat elastic bodies exert upon each other at the contact surface areas, a force corresponding to a surface pressing, and the casing has a wall with a structure or with structures, in which a heat conducting body engages such that said heat conducting body may not be shiftable in the direction of the force acting on the contact surface areas.

Patent document CN 113 661 599 A discloses a battery unit, in particular for an electric or hybrid motor vehicle, comprising: a plurality of battery cells, optionally physically grouped into modules of two or more battery cells, a housing that accepts and surrounds said plurality of battery cells, said housing comprising a bottom wall on which the battery cells rest, a top wall arranged above the battery cells, and side walls connecting the lower and upper walls, wherein at least one cooling channel passes through each of the lower and upper walls of the housing, via which a coolant is able to flow, said cooling channel being configured to cover the entirety of the surface of the lower wall, or of the upper wall, and wherein the lower and upper walls of the housing are connected by a plurality of cooling plates, each cooling plate being arranged between two adjacent battery cells, or modules of adjacent battery cells, or being in contact with at least one battery cell, and being configured to transmit the heat generated by the battery cells to the coolant.

Moreover, patent document US 2006/214641 A1 discloses a rechargeable battery module including a plurality of unit cells arranged at particular intervals; a heat sink plate mounted between the plurality of unit cells and adapted to dissipate heat generated by the plurality of unit cells; and at least one cooling channel positioned on a first side of the heat sink plate or penetrating through the heat sink plate and adapted to circulate a coolant. A method for dissipating heat from a plurality of unit cells arranged at particular intervals includes providing a heat sink having a channel adapted to circulate a coolant; positioning a heat sink between neighboring ones of the plurality of unit cells; and supplying a coolant to the channel.

### SUMMARY OF THE INVENTION

For further reduction of manufacturing cost, however, there is still room for improvement in the cooling structure of the battery module. It is an object of the present technology to provide a battery module to attain efficient cooling while reducing manufacturing cost.

The above object is solved by the subject-matter of claim 1. Further advantageous configurations of the invention can be drawn from the dependent claims.

A battery module according to an explanatory aspect of the present disclosure includes: a plurality of battery cells arranged side by side in a first direction, each of the plurality of battery cells having a prismatic shape; and a partition wall portion provided between the plurality of battery cells to secure electrical insulation between the plurality of battery cells. The partition wall portion includes a first partition wall portion and a second partition wall portion, the first partition wall portion and the second partition wall portion being provided alternately, the second partition wall portion having a shape different from a shape of the first partition wall portion, the second partition wall portion forming a cooling space between the second partition wall portion and each of two battery cells located on both sides beside the second partition wall portion in the first direction.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing a configuration of a battery module according to one embodiment of the present technology.
Fig. 2 is a perspective view of the battery module of Fig. 1 when viewed in a direction of an arrow II.
Fig. 3 is a perspective view showing configurations of a unit and end plates included in the battery module according to the embodiment of the present technology.
Fig. 4 is a perspective view showing a configuration of the unit included in the battery module according to the embodiment of the present technology.
Fig. 5 is a cross sectional view of the unit of Fig. 4 when viewed in a direction of an arrow V.
Fig. 6 is a perspective view showing a configuration of a battery cell included in the battery module according to the embodiment of the present technology.
Fig. 7 is a partial perspective view showing a configuration of each voltage detection wire included in the battery module according to the embodiment of the present technology.
Fig. 8 is a cross sectional view of the unit of Fig. 4 when viewed in a direction of arrows of a line VIII-VIII.
Fig. 9 is an enlarged view of a portion IX in Fig. 8.
Fig. 10 is a cross sectional view when viewed in a direction of arrows of a line X-X in Fig. 8.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly.

It should be noted that in the present specification, the terms "comprise", "include", and "have" are open-end terms. That is, when a certain configuration is included, a configuration other than the foregoing configuration may or may not be included. Further, the present technology is not limited to one that necessarily exhibits all the functions and effects stated in the present embodiment.

In the present specification, the term "battery" is not limited to a lithium ion battery, and may include another battery such as a nickel-metal hydride battery. In the present specification, the term "electrode" may collectively represent a positive electrode and a negative electrode. Further, the term "electrode plate" may collectively represent a positive electrode plate and a negative electrode plate.

It should be noted that in the figures, a stacking direction of the battery cells is defined as a first direction serving as a Y direction, a direction in which two electrode terminals of each battery cell are arranged side by side is defined as a second direction serving as an X direction, and a height direction of the battery cell is defined as a third direction serving as a Z direction.

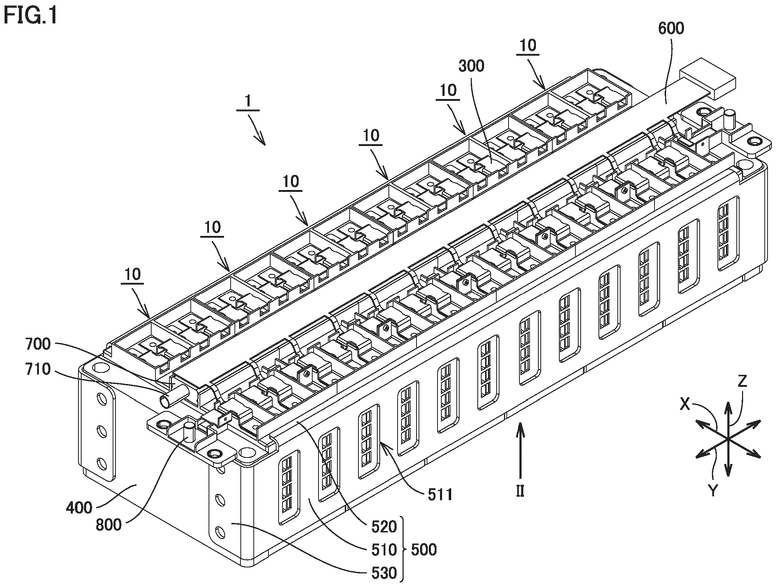

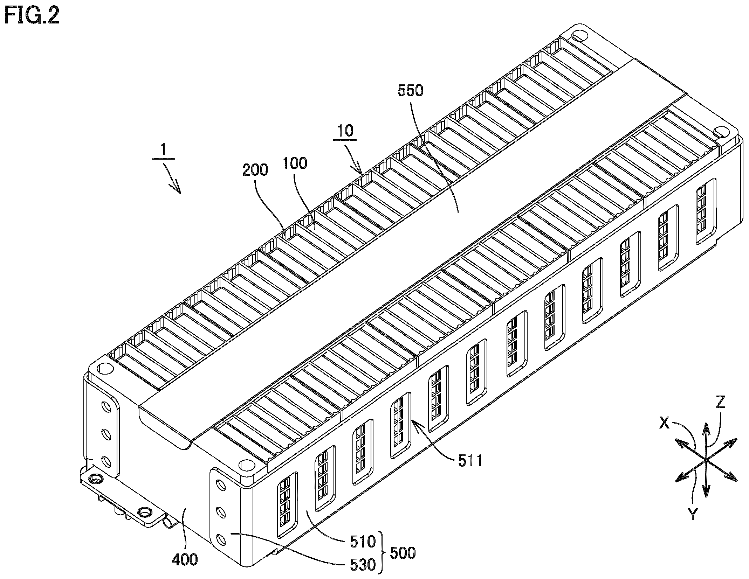

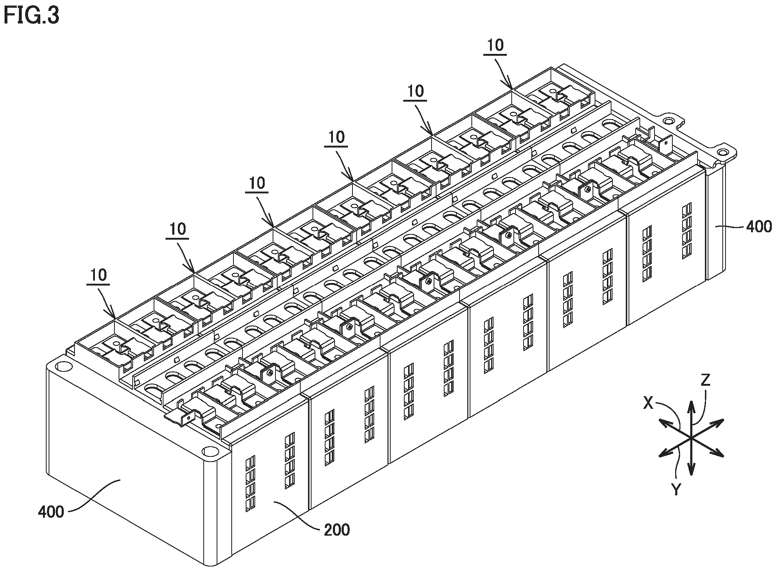

Fig. 1 is a perspective view showing a configuration of a battery module according to one embodiment of the present technology. Fig. 2 is a perspective view of the battery module of Fig. 1 when viewed in a direction of an arrow II. Fig. 3 is a perspective view showing configurations of a unit and end plates included in the battery module according to the embodiment of the present technology.

A battery module 1 is used as a power supply for driving a vehicle such as a hybrid electric vehicle (HEV), a plug-in hybrid electric vehicle (PHEV), or a battery electric vehicle (BEV), for example.

First, an overall structure of battery module 1 will be described. As shown in Figs. 1 to 3, battery module 1 includes a plurality of units 10, end plates 400, restraint members 500, a lower restraint member 550, a wiring member 600, a duct 700, and connection terminals 800.

The plurality of units 10 are arranged side by side in the first direction (Y direction). Six units 10 are arranged side by side in the Y direction as the plurality of units 10 according to the present embodiment. It should be noted that the number of the plurality of units 10 is not particularly limited as long as two or more units 10 are included.

The plurality of units 10 are sandwiched between two end plates 400. The plurality of units 10 according to the present embodiment are pressed by end plates 400 and restrained between two end plates 400.

End plates 400 are provided at the both ends beside the plurality of units 10 in the Y direction. Each of end plates 400 is fixed to a base such as a pack case that accommodates battery module 1. End plate 400 is composed of, for example, aluminum or iron.

Restraint members 500 are provided on both sides beside the plurality of units 10 and end plates 400 in the X direction. When restraint members 500 are engaged with end plates 400 with compressive force in the Y direction being applied to the plurality of units 10 arranged side by side and to end plates 400 and then the compressive force is released, tensile force acts on restraint members 500 that connect two end plates 400. As a reaction thereto, restraint members 500 press two end plates 400 in directions of bringing them closer to each other. As a result, restraint members 500 restrain the plurality of units 10 in the first direction (the Y direction).

Each of restraint members 500 includes a plate-shaped portion 510, a first flange portion 520, and second flange portions 530. Restraint member 500 is composed of iron, for example.

Plate-shaped portion 510 is a member extending in the Y direction. Plate-shaped portion 510 is provided with a plurality of openings 511. The plurality of openings 511 are provided at intervals in the Y direction, and each of openings 511 is constituted of a through hole extending through plate-shaped portion 510 in the X direction.

First flange portion 520 extends from beside the side surfaces of the plurality of units 10 so as to be located over the upper surfaces of the plurality of units 10. By providing first flange portion 520, rigidity of restraint member 500 formed to be relatively thin can be secured.

Second flange portions 530 are connected to both ends of plate-shaped portion 510 in the Y direction. Second flange portions 530 are fixed to end plates 400. Second flange portions 530 are fixed to end plates 400 by a known fixing method such as fastening of bolt, for example. Thus, restraint members 500 connect two end plates 400 to each other.

As shown in Fig. 2, lower restraint member 550 is provided on the bottom surfaces of the plurality of units 10 and end plates 400. Lower restraint member 550 protects below-described battery cells 100 from the bottom surface side. Lower restraint member 550 is composed of iron, for example.

As shown in Fig. 1, wiring member 600 is provided at a position facing the plurality of units 10 in the Z direction. Wiring member 600 extends in the Y direction through the center portion of each of the plurality of units 10 in the X direction. Wiring member 600 is electrically connected to the plurality of units 10. Wiring member 600 is, for example, a flexible printed circuit board.

Duct 700 extends in the Y direction. Duct 700 extends at a position overlapping with wiring member 600 when viewed in the Z direction. Duct 700 is disposed between each of the plurality of units 10 and wiring member 600 in the Z direction.

Connection terminals 800 are arranged on both sides beside the plurality of units 10 arranged side by side in the Y direction. Each of connection terminals 800 is provided at a position overlapping with end plate 400 when viewed in the Z direction. Connection terminal 800 connects battery module 1 to an external wiring such as a cable (not shown) disposed outside battery module 1.

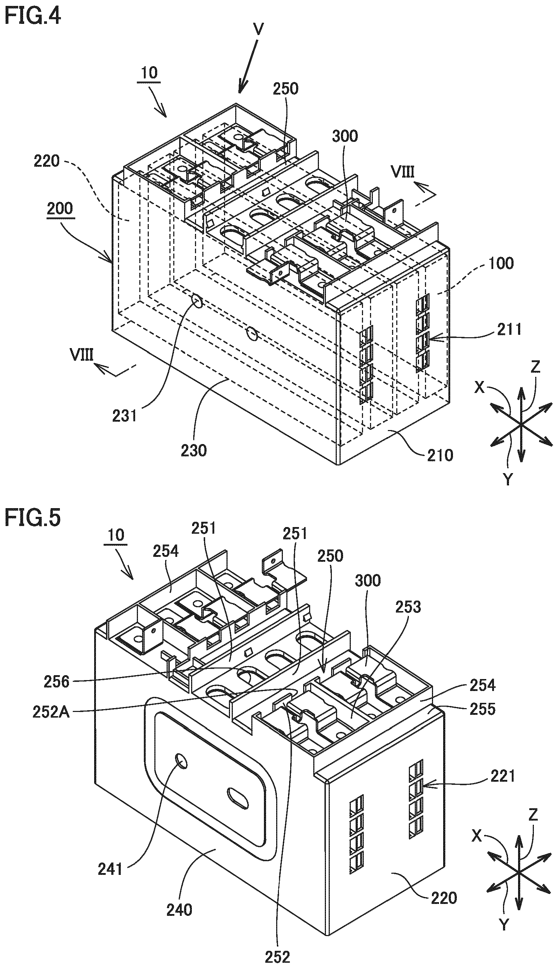

Next, a structure of unit 10 will be described. Fig. 4 is a perspective view showing a configuration of the unit included in the battery module according to the embodiment of the present technology. Fig. 5 is a perspective view of the unit of Fig. 4 when viewed in a direction of an arrow V.

As shown in Figs. 4 and 5, each of the plurality of units 10 includes a plurality of battery cells 100, a case 200 serving as a supporting member, and a bus bar 300.

Unit 10 includes two or more battery cells 100. Unit 10 according to one embodiment of the present technology includes four battery cells 100 as an even number of battery cells 100. It should be noted that the number of battery cells 100 included in each of the plurality of units 10 is not particularly limited as long as two or more battery cells 100 are included. Moreover, an odd number of battery cells 100 may be included in each of the plurality of units 10.

The plurality of battery cells 100 are arranged side by side in the first direction (Y direction). Four battery cells 100 are arranged side by side in the Y direction as the plurality of battery cells 100 according to the embodiment of the present technology. The arrangement direction of the plurality of units 10 is the same as the arrangement direction of the plurality of battery cells 100 in each of the plurality of units 10.

Case 200 has an external appearance with a rectangular parallelepiped shape. Case 200 accommodates the plurality of battery cells 100. Case 200 is composed of, for example, a resin such as polypropylene. As shown in Figs. 1 to 3, case 200 is compressed in the first direction (Y direction) by restraint members 500.

As shown in Figs. 4 and 5, case 200 has a front wall portion 210, a rear wall portion 220, a first side wall portion 230, a second side wall portion 240, and an upper surface portion 250.

Front wall portion 210 is a surface adjacent to one of restraint members 500. As shown in Fig. 4, front wall portion 210 is provided with a plurality of first ventilation ports 211. Each of first ventilation ports 211 is a through hole extending through front wall portion 210 in the X direction.

As shown in Fig. 5, rear wall portion 220 is a surface facing front wall portion 210 with the plurality of battery cells 100 being interposed therebetween in the X direction. Rear wall portion 220 is provided with a plurality of second ventilation ports 221. Each of second ventilation ports 221 is a through hole extending through rear wall portion 220 in the X direction. Each of the plurality of second ventilation ports 221 communicates, through a below-described communication space 280, with a corresponding one of first ventilation ports 211 arranged side by side in the X direction.

First side wall portion 230 and second side wall portion 240 are arranged side by side in the first direction (Y direction), and face each other.

As shown in Fig. 4, first side wall portion 230 has a protrusion 231. Protrusion 231 protrudes opposite to second side wall portion 240. As shown in Fig. 5, second side wall portion 240 is provided with a recess 241. Recess 241 is recessed toward first side wall portion 230 and has a shape engageable with protrusion 231. Protrusion 231 and recess 241 of adjacent units 10 of the plurality of units 10 are engaged with each other.

Upper surface portion 250 includes first wall portions 251, second wall portions 252, third wall portions 253, fourth wall portions 254, engagement surfaces 255, and hole portions 256. Two first wall portions 251 are formed parallel to each other so as to extend in the Y axis direction at the center portion in the X direction. Second wall portions 252, third wall portions 253, and fourth wall portions 254 are provided on both sides beside first wall portions 251 in the X direction so as to define installation positions for bus bars 300. Each of second wall portions 252 is provided with a notch 252A through which a below-described voltage detection wire 610 extends. Second flange portions 530 of restraint members 500 are engaged with engagement surfaces 255. Hole portions 256 communicate with below-described gas-discharge valves 130.

Each of bus bars 300 is composed of an electric conductor. The plurality of bus bars 300 electrically connect the plurality of battery cells 100 together.

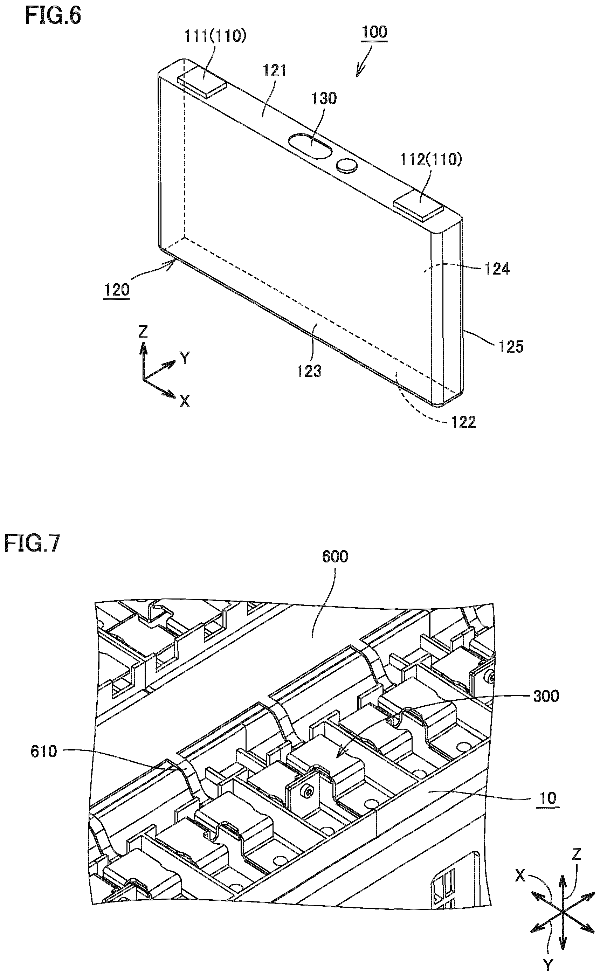

Fig. 6 is a perspective view showing a configuration of a battery cell included in the battery module according to the embodiment of the present technology.

As shown in Fig. 6, battery cell 100 is, for example, a lithium ion battery. Battery cell 100 has a prismatic shape. Individual battery cell 100 has an output density of, for example, about 8000 W/L or more.

Battery cell 100 according to the present embodiment has electrode terminals 110, a housing 120, and a gas-discharge valve 130.

Electrode terminals 110 are formed on housing 120. Electrode terminals 110 have a positive electrode terminal 111 and a negative electrode terminal 112 as two electrode terminals 110 arranged side by side along the second direction (the X direction) orthogonal to the first direction (the Y direction).

Positive electrode terminal 111 and negative electrode terminal 112 are provided to be separated from each other in the X direction. Positive electrode terminal 111 and negative electrode terminal 112 are provided on both sides beside wiring member 600 and duct 700 in the X direction.

Housing 120 has a rectangular parallelepiped shape, and forms the external appearance of battery cell 100. An electrode assembly (not shown) and an electrolyte solution (not shown) are accommodated in housing 120.

Housing 120 includes an upper surface 121, a lower surface 122, a first side surface 123, a second side surface 124, and a third side surface 125.

Upper surface 121 is a flat surface orthogonal to the Z direction. Electrode terminals 110 are disposed on upper surface 121. Lower surface 122 faces upper surface 121 along the third direction (Z direction) orthogonal to the first direction (Y direction).

Each of first side surface 123 and second side surface 124 is constituted of a flat surface orthogonal to the Y direction. Each of first side surface 123 and second side surface 124 has the largest area among the areas of the plurality of side surfaces of housing 120. Each of first side surface 123 and second side surface 124 has a rectangular shape when viewed in the Y direction. Each of first side surface 123 and second side surface 124 has a rectangular shape in which the X direction corresponds to the long-side direction and the Z direction corresponds to the short-side direction when viewed in the Y direction.

The plurality of battery cells 100 are stacked such that first side surfaces 123 of battery cells 100, 100 adjacent to each other in the Y direction face each other and second side surfaces 124 of battery cells 100, 100 adjacent to each other in the Y direction face each other. Thus, positive electrode terminals 111 and negative electrode terminals 112 are alternately arranged in the Y direction in which the plurality of battery cells 100 are stacked.

It should be noted that when an odd number of battery cells 100 are included in unit 10, the posture of unit 10 may be turned by 180° with respect to the Z axis between units 10 adjacent to each other in the Y direction.

Gas-discharge valve 130 is provided in upper surface 121. When internal pressure of housing 120 becomes more than or equal to a predetermined value due to gas generated inside housing 120, gas-discharge valve 130 discharges the gas to the outside of housing 120. The gas from gas-discharge valve 130 flows through duct 700 in Fig. 1 and is discharged to the outside of battery module 1.

Fig. 7 is a partial perspective view showing a configuration of each voltage detection wire included in the battery module according to the embodiment of the present technology.

As shown in Fig. 7, wiring member 600 includes voltage detection wires 610 that each detects a voltage. The plurality of voltage detection wires 610 extend to and are connected to bus bars 300. One voltage detection wire 610 is disposed in each of the plurality of units 10. Thus, voltage detection wire 610 can detect the voltage of unit 10.

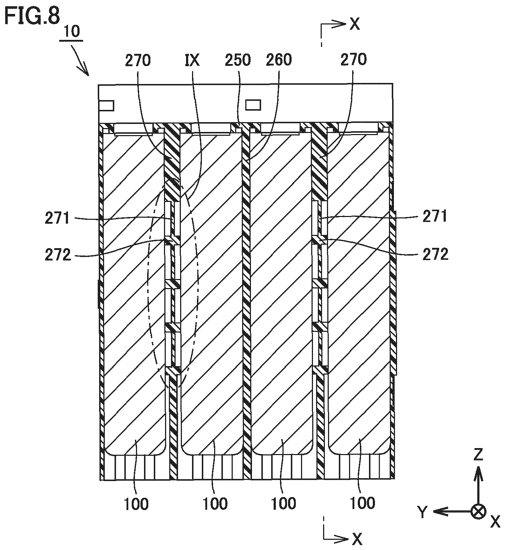

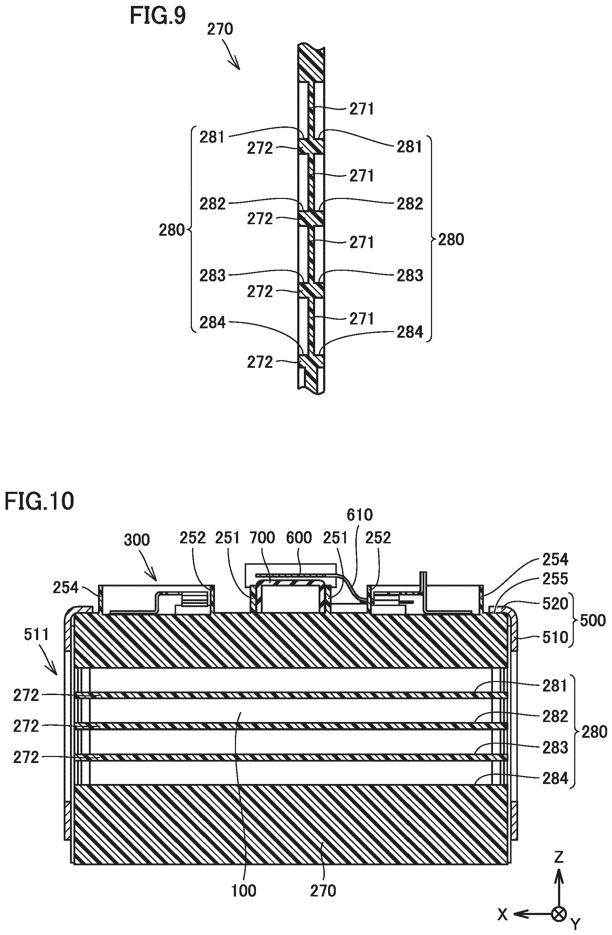

Fig. 8 is a cross sectional view of the unit of Fig. 4 when viewed in a direction of arrows of a line VIII-VIII. Fig. 9 is an enlarged view of a portion IX in Fig. 8. Fig. 10 is a cross sectional view when viewed in a direction of arrows of a line X-X in Fig. 8.

As shown in Figs. 8 to 10, case 200 serving as a supporting member further has partition wall portions. Each of the partition wall portions is located between the plurality of battery cells 100, and functions as a separator to secure electrical insulation between the plurality of battery cells 100. The partition wall portions according to the present embodiment have a first partition wall portion 260 and second partition wall portions 270.

As shown in Fig. 8, battery cells 100 are sandwiched by first partition wall portion 260 and second partition wall portions 270 of case 200. Case 200 supports battery cells 100 in the first direction (Y direction).

First partition wall portion 260 is located at substantially the center of unit 10 in the Y direction. First partition wall portion 260 in the present embodiment is disposed between two battery cells 100 arranged on the center side in the Y direction among four battery cells 100 accommodated in unit 10. First partition wall portion 260 is continuous in the Z direction inside case 200.

Second partition wall portions 270 are provided on both sides beside first partition wall portion 260 in the Y direction with battery cells 100 being interposed therebetween. Second partition wall portions 270 are continuous in the Z direction inside case 200.

Each of second partition wall portions 270 has thin portions 271 and ribs 272. Each of thin portions 271 is a portion of second partition wall portion 270 with a small thickness in the Y direction. Four thin portions 271 are provided along the Z direction so as to be centered on the upper surface portion 250 side with respect to the center of second partition wall portion 270 in the Z direction. Ribs 272 are located among four thin portions 271.

In battery module 1, first partition wall portion 260 and second partition wall portion 270 are alternately arranged side by side in the first direction (Y direction). First partition wall portion 260 and second partition wall portion 270 have different shapes. Each of first partition wall portion 260 and second partition wall portion 270 is in abutment with battery cell 100 in the first direction (Y direction). On this occasion, a contact area (second area) between second partition wall portion 270 and battery cell 100 is smaller than a contact surface (first area) between first partition wall portion 260 and battery cell 100.

A partition wall portion is provided with a communication space 280 (cooling space) extending in the second direction (X direction) intersecting the first direction (Y direction) and the third direction (Z direction). Regarding the partition wall portions according to the present embodiment, a plurality of communication spaces 280 are provided in the both surfaces of second partition wall portion 270. Since thin portions 271 and ribs 272 are formed in second partition wall portions 270, communication spaces 280 communicate inside case 200 in which battery cells 100 are accommodated. Communication spaces 280 communicate with first ventilation ports 211 and second ventilation ports 221.

As shown in Fig. 10, communication space 280 is formed to extend across a whole of a width direction of second partition wall portion 270 in the second direction (X direction). Communication spaces 280 are continuous to openings 511 in the second direction (X direction). Thus, by introducing cooling air from first ventilation ports 211 or second ventilation ports 221 and allowing the cooling air to flow through communication spaces 280, battery cells 100 accommodated in case 200 can be cooled.

At least part of communication spaces 280 is located on the upper surface 121 side with respect to the center between upper surface 121 and lower surface 122 of housing 120. In the embodiment of the present technology, two communication spaces 281, 282 provided on the upper surface 121 side among four communication spaces 281, 282, 283, 284 arranged side by side in the Z direction are located on the upper surface 121 side with respect to the center between upper surface 121 and lower surface 122.

Since at least part of communication spaces 280 is located on the upper surface 121 side with respect to the center between upper surface 121 and lower surface 122, the center of gravity of case 200 serving as a supporting member can be low, with the result that case 200 can be stably freestanding.

In battery module 1 according to the embodiment of the present technology, second partition wall portions 270, each of which has both surfaces provided with communication spaces 280 that contribute to cooling of battery cell 100, are provided at every other location along the first direction (Y direction), thereby providing the same cooling effect to all the battery cells 100. On the other hand, the thickness of first partition wall portion 260 having no communication space 280 formed therein can be made smaller than that of second partition wall portion 270. Therefore, battery cells 100 can be efficiently and uniformly cooled while attaining reduced manufacturing cost and reduced size of battery module 1.

Further, in battery module 1, since the plurality of battery cells 100 are accommodated in case 200 such that they are arranged side by side in the first direction (Y direction), unit 10 is formed, and the plurality of such units 10 are arranged side by side in the first direction (Y direction) to form battery module 1, the manufacturing process can be simplified as compared with a case where battery module 1 is manufactured with each of the plurality of battery cells 100 being handled as one unit. An example of the simplification is, for example, as follows: units 10 each formed to be small is caused to pass through a welding machine to weld bus bars 300 in units 10, and then bus bars 300 over different units 10 are individually joined together, thereby attaining increased efficiency in the welding process.

Further, in battery module 1, since units 10 each including the plurality of battery cells 100 accommodated in case 200 are formed, battery module 1 can be readily disassembled or replaced with each unit 10 being handled as one unit.

Further, in battery module 1, since units 10 each including the plurality of battery cells 100 accommodated in case 200 are formed, battery module 1 can be divided with each unit 10 being handled as one unit when discarding battery module 1 so as to lower the voltage for the purpose of handling, thereby facilitating the discarding of battery module 1.

Further, in battery module 1, battery cells 100 can be restrained by restraint members 500 through the configurations of units 10.

Further, in battery module 1, the plurality of units 10 are connected together by bus bars 300, with the result that battery module 1 can be manufactured with unit 10 being handled as one unit.

Further, in battery module 1, since one voltage detection wire 610 is disposed on one unit 10, cost of battery module 1 can be low as compared with a case where voltage detection wire 610 is disposed on each of battery cells 100.

Further, in battery module 1, two or more battery cells 100 are included in one unit and each of two or more battery cells 100 is set to have an output density of about 8000 W/L or more, thereby forming a power supply device having a predetermined voltage or more with each of the units being handled as one unit.

## Claims

1. A battery module (1) comprising:
a plurality of battery cells (100) arranged side by side in a first direction, each of the plurality of battery cells (100) having a prismatic shape;
a partition wall portion (260, 270) provided between the plurality of battery cells (100) to secure electrical insulation between the plurality of battery cells (100);
a case (200) that accommodates the plurality of battery cells (100) and supports the plurality of battery cells (100) at least in the first direction so as to form a unit (10) including the plurality of battery cells (100); and
a restraint member (500) that restrains a plurality of the units (10) in the first direction, wherein
the case (200) of each unit (10) is compressed in the first direction by the restraint member (500),
the partition wall portion (260, 270) includes
a first partition wall portion (260), and
a second partition wall portion (270), the first partition wall portion (260) and the second partition wall portion (270) being provided alternately, the second partition wall portion (270) having a shape different from a shape of the first partition wall portion (260), the second partition wall portion (270) forming a cooling space (280) between the second partition wall portion (270) and each of two battery cells (100) located on both sides beside the second partition wall portion (270) in the first direction.

2. The battery module according to claim 1, wherein
each of the plurality of battery cells (100) has two electrode terminals (110) arranged side by side along a second direction orthogonal to the first direction, and
the cooling space (280) extends in the second direction.

3. The battery module according to claim 2, wherein the cooling space (280) is formed to extend across a whole of a width direction of the second partition wall portion (270) in the second direction.

4. The battery module according to claim 1, wherein the case (200) supports two battery cells (100), and the second partition wall portion (270) is provided between the two battery cells (100).

5. The battery module according to claim 2, wherein
the restraint member (500) is provided with an opening (511) continuous to the cooling space (280) in the second direction.

6. The battery module according to claim 1 to 5, wherein each of the plurality of the units (10) includes two or more battery cells (100), and each of the two or more battery cells (100) has an output density of 8000 W/L or more.

7. The battery module according to any one of claims 1 to 6, wherein
the first partition wall portion (260) is in abutment with an adjacent battery cell (100) with a first area in the first direction,
the second partition wall portion (270) is in abutment with an adjacent battery cell (100) with a second area in the first direction, and
the second area is smaller than the first area.

## Patentansprüche

1. Batteriemodul (1), aufweisend:
eine Mehrzahl an Batteriezellen (100), die nebeneinander in einer ersten Richtung angeordnet sind, wobei jede aus der Mehrzahl an Batteriezellen (100) eine prismatische Gestalt aufweist;
einen Trennwandabschnitt (260, 270), der sich zwischen der Mehrzahl an Batteriezellen (100) befindet, um eine elektrische Isolierung zwischen der Mehrzahl an Batteriezellen (100) sicherzustellen;
ein Gehäuse (200), das die Mehrzahl an Batteriezellen (100) beherbergt und die Mehrzahl an Batteriezellen (100) zumindest in der ersten Richtung trägt, so dass eine Einheit (10) gebildet wird, die die Mehrzahl an Batteriezellen (100) beinhaltet; und
ein Rückhalteelement (500), das die Mehrzahl der Einheiten (10) in der ersten Richtung zurückhält, wobei
das Gehäuse (200) jeder Einheit (10) in der ersten Richtung durch das Rückhalteelement (500) komprimiert ist,
der Trennwandabschnitt (260, 270) beinhaltet:
einen ersten Trennwandabschnitt (260), und
einen zweiten Trennwandabschnitt (270), wobei der erste Trennwandabschnitt (260) und der zweite Trennwandabschnitt (270) abwechselnd bereitgestellt sind, wobei der zweite Trennwandabschnitt (270) eine Gestalt aufweist, die sich von einer Gestalt des ersten Trennwandabschnitts (260) unterscheidet, wobei der zweite Trennwandabschnitt (270) einen Kühlraum (280) zwischen dem zweiten Trennwandabschnitt (270) und jeder der zwei Batteriezellen (100) bildet, die sich auf beiden Seiten neben dem zweiten Trennwandabschnitt (270) in der ersten Richtung befinden.

2. Batteriemodul nach Anspruch 1, wobei
jede aus der Mehrzahl an Batteriezellen (100) zwei Elektrodenanschlüsse (110) aufweist, die nebeneinander entlang einer zweiten Richtung angeordnet sind, die zu der ersten Richtung rechtwinklig ist, und
der Kühlraum (280) sich in der zweiten Richtung erstreckt.

3. Batteriemodul nach Anspruch 2, wobei der Kühlraum (280) so ausgebildet ist, dass sich dieser über eine Gesamtheit einer Breitenrichtung des zweiten Trennwandabschnitts (270) in der zweiten Richtung erstreckt.

4. Batteriemodul nach Anspruch 1, wobei das Gehäuse (200) zwei Batteriezellen (100) trägt, und der zweite Trennwandabschnitt (270) zwischen den beiden Batteriezellen (100) bereitgestellt ist.

5. Batteriemodul nach Anspruch 2, wobei
das Rückhalteelement (500) mit einer Öffnung (511) versehen ist, die zum Kühlraum (280) in der zweiten Richtung durchgehend ist.

6. Batteriemodul nach Anspruch 1 bis 5, wobei jede aus der Mehrzahl der Einheiten (10) zwei oder mehr Batteriezellen (100) beinhaltet, und wobei jede der zwei oder mehr Batteriezellen (100) eine Ausgangsdichte von 8000 W/L oder mehr aufweist.

7. Batteriemodul nach einem der Ansprüche 1 bis 6, wobei
der erste Trennwandabschnitt (260) an einer benachbarten Batteriezelle (100) mit einer ersten Fläche in der ersten Richtung anliegt,
der zweite Trennwandabschnitt (270) an einer benachbarten Batteriezelle (100) mit einer zweiten Fläche in der ersten Richtung anliegt, und
die zweite Fläche kleiner ist als die erste Fläche.

## Revendications

1. Module de batterie (1) comprenant :
une pluralité de cellules de batterie (100) disposées côte à côte dans une première direction, chacune de la pluralité de cellules de batterie (100) ayant une forme prismatique ;
une partie de paroi de séparation (260, 270) placée entre la pluralité de cellules de batterie (100) pour assurer l'isolation électrique entre la pluralité de cellules de batterie (100) ;
un boîtier (200) qui accueille la pluralité de cellules de batterie (100) et supporte la pluralité de cellules de batterie (100) au moins dans la première direction de manière à former une unité (10) comprenant la pluralité de cellules de batterie (100) ; et
un élément de retenue (500) qui retient une pluralité d'unités (10) dans la première direction, dans lequel
le boîtier (200) de chaque unité (10) est comprimé dans la première direction par l'élément de retenue (500),
la partie de paroi de séparation (260, 270) comprend
une première partie de paroi de séparation (260), et
une deuxième partie de paroi de séparation (270), la première partie de paroi de séparation (260) et la deuxième partie de paroi de séparation (270) étant fournies en alternance, la deuxième partie de paroi de séparation (270) ayant une forme différente de celle de la première partie de paroi de séparation (260), la deuxième partie de paroi de séparation (270) formant un espace de refroidissement (280) entre la deuxième partie de paroi de séparation (270) et chacune des deux cellules de batterie (100) situées de part et d'autre de la deuxième partie de paroi de séparation (270) dans la première direction.

2. Le module de batterie selon la revendication 1, dans lequel
chacune de la pluralité de cellules de batterie (100) comporte deux bornes d'électrodes (110) disposées côte à côte le long d'une deuxième direction orthogonale à la première direction, et
l'espace de refroidissement (280) s'étend dans la deuxième direction.

3. Le module de batterie selon la revendication 2, dans lequel l'espace de refroidissement (280) est formé pour s'étendre sur toute la largeur de la deuxième partie de paroi de séparation (270) dans la deuxième direction.

4. Le module de batterie selon la revendication 1, dans lequel le boîtier (200) supporte deux cellules de batterie (100), et la deuxième partie de paroi de séparation (270) est prévue entre les deux cellules de batterie (100).

5. Le module de batterie selon la revendication 2, dans lequel
l'élément de retenue (500) est pourvu d'une ouverture (511) continue vers l'espace de refroidissement (280) dans la deuxième direction.

6. Le module de batterie selon les revendications 1 à 5, dans lequel chacune de la pluralité d'unités (10) comprend deux cellules de batterie (100) ou plus, et chacune des deux cellules de batterie (100) ou plus a une densité de sortie de 8000 W/L ou plus.

7. Le module de batterie selon l'une des revendications 1 à 6, dans lequel
la première partie de paroi de séparation (260) est en butée avec une cellule de batterie adjacent (100) avec une première zone dans la première direction,
la deuxième partie de paroi de séparation (270) est en butée avec une cellule de batterie adjacent (100) avec une deuxième zone dans la première direction, et
la deuxième zone est plus petite que la première zone.
